# FASCICULE DE BREVET EUROPEEN

(11) **EP 3 347 667 B1**
(45) Date de publication et mention de la délivrance du brevet: **30.01.2019**
(21) Numéro de dépôt: 16812986.4
(22) Date de dépôt: 16.11.2016
(51) Int. Cl.: F28F 7/02, F28D 15/02, F28D 15/04, F28F 13/00, B64G 1/50

(54) **DISPOSITIF D'ÉCHANGE THERMIQUE POUR SATELLITE ARTIFICIEL, MUR ET ASSEMBLAGE DE MURS COMPRENANT UN TEL DISPOSITIF D'ÉCHANGE THERMIQUE**
WÄRMETAUSCHVORRICHTUNG FÜR KÜNSTLICHE SATELLITEN, WAND UND ANORDNUNG VON WÄNDEN MIT SOLCH EINER WÄRMETAUSCHVORRICHTUNG
HEAT EXCHANGE DEVICE FOR ARTIFICIAL SATELLITE, WALL AND ASSEMBLY OF WALLS COMPRISING SUCH A HEAT EXCHANGE DEVICE

(30) Priorité: 16.11.2015 FR 1561010
(43) Date de publication de la demande: 18.07.2018
(73) Titulaire: Airbus Defence and Space SAS, 31402 Toulouse Cedex 4 (FR)
(72) Inventeur: FLEMIN, Christian, 31280 Dremil-Lafage (FR); COQUARD, Typhaine, 31400 Toulouse (FR); WALKER, Andrew, 31402 Toulouse Cedex 4 (FR)
(74) Mandataire: Cabinet Plasseraud
(86) Numéro de dépôt international: PCT/FR2016/052966
(87) Numéro de publication internationale: WO 2017/085399

(56) Documents cités:
- DE-U1-202007 008 221
- FR-A1- 2 038 204
- FR-A1- 2 905 933
- FR-A1- 2 938 323
- JP-A- S6 082 782
- JP-A- H09 324 991
- US-A- 5 213 153
- US-A- 5 506 032
- US-A1- 2003 121 639
- US-A1- 2010 243 817
- US-B1- 6 341 062
- DATABASE WPI Section PQ, Week 201341 Thomson Scientific, London, GB; Class Q78, AN 2013-K89277 XP002760877, -& JP 2013 120053 A (TOYOTA MOTOR CORP.) 17 juin 2013 (2013-06-17)
- DATABASE WPI Section Ch, Week 201055 Thomson Scientific, London, GB; Class L03, AN 2010-K28233 XP002760878, -& KR 2010 0089553 A (ZALMAN TECH CO LTD) 12 août 2010 (2010-08-12)

## Description

La présente invention se situe dans le domaine des engins spatiaux.

En particulier, la présente invention concerne le contrôle thermique des satellites de télécommunication géostationnaires.

En raison du mouvement de révolution de la Terre autour du soleil, les différentes faces d'un satellite géostationnaire ne reçoivent pas la même quantité de rayonnement solaire au cours d'une journée ainsi qu'au cours des saisons. Il en résulte des différences significatives de températures entre les faces du satellite ainsi que des variations cycliques de ces températures au cours d'une journée et au cours des saisons. Ces écarts de température ainsi que ces variations de température au cours du temps, sont contraignantes pour le satellite et pour sa charge utile.

Pour diminuer ces écarts et ces variations de température, des systèmes d'échange thermique sont généralement mis en place. Ces systèmes d'échange thermique collectent la chaleur générée par la charge utile ou par le rayonnement solaire ou par le rayonnement d'une planète, la transportent pour l'homogénéiser entre les différentes zones du satellite et enfin l'évacuent vers l'espace à l'aide de surfaces radiatives. Ces systèmes d'échange thermique assurent que la plage de fonctionnement thermique des équipements électroniques soit respectée tout au long de la vie du satellite, depuis les tests au sol, et pendant toute la durée de la mission car la surchauffe ainsi que le refroidissement excessif d'un équipement peut l'endommager ou accélérer son vieillissement.

Pour évacuer la chaleur dissipée par les équipements électroniques, le document US 5,506,032 propose de réaliser un panneau en nid d'abeille comprenant un premier réseau de caloducs intégrés dans le panneau et un deuxième réseau de caloducs fixés sur le panneau. Les caloducs du premier réseau s'étendent selon une direction donnée. Les caloducs du deuxième réseau s'étendent selon une direction perpendiculaire à la direction donnée. Le transport de chaleur d'un réseau à l'autre est assuré par conduction thermique au niveau des zones ou les caloducs se croisent.

Cette architecture est robuste et assure une redondance en cas de perçage d'un des caloducs ou d'un dysfonctionnement interne. Toutefois, cette architecture est encombrante et présente une masse importante. De plus, elle est peu performante en raison du nombre important d'interfaces entre l'équipement électronique et le radiateur (souvent quatre à cinq interfaces). Ces interfaces constituent des résistances thermiques de contact. Il en résulte un fort gradient de température entre les équipements électroniques et le radiateur et une évacuation de chaleur peu importante. Or, la tendance actuelle est d'installer des équipements électroniques plus complexes qui rejettent une quantité de chaleur supérieure tout en augmentant le nombre d'équipements par mètre carré de mur satellite.

Le but de la présente invention est de proposer un dispositif d'échange thermique plus efficace en fonctionnement nominal pour diverses configurations de charge des équipements électroniques ainsi qu'en mode dégradé suite à des pannes ou à des détériorations au sol ou en orbite, et qui soit à la fois plus compact au sein du satellite et moins complexe à installer.

A cet effet, la présente invention a pour objet un dispositif d'échange thermique destiné à assurer un échange thermique entre un fluide caloporteur d'un premier réseau de caloducs capillaires et un fluide caloporteur d'un deuxième réseau de caloducs capillaires, caractérisé en ce qu'il comporte un bloc massif muni d'au moins un premier canal et un deuxième canal indépendants l'un de l'autre, chaque canal ayant une structure interne capillaire, le premier canal ayant au moins une ouverture destinée à être connectée à un caloduc capillaire du premier réseau, le deuxième canal ayant au moins une ouverture destinée à être connectée à un caloduc capillaire du deuxième réseau, le premier canal ayant une portion située à proximité d'une portion du deuxième canal de sorte que, lorsque le dispositif d'échange thermique est connecté au premier réseau et au deuxième réseau, le fluide caloporteur du premier réseau soit en échange thermique avec le fluide caloporteur du deuxième réseau, par l'intermédiaire desdites portions en échange thermique.

Avantageusement, ce dispositif d'échange thermique permet également de diminuer les coûts de matériel associé, les coûts des moyens humains et matériels pour le tester.

Avantageusement, ce dispositif d'échange thermique permet de diminuer la masse totale du satellite lors du lancement.

Avantageusement, ce dispositif d'échange thermique est compact, peu onéreux et passif. Il permet de réduire l'encombrement et de faciliter les opérations de montage et de démontage. Il est performant au niveau de la collecte de chaleur et il offre de la redondance permettant de pallier à des défaillances ou à des perçages de caloducs en phase de test ou en orbite suite à des impacts de micrométéorites ou des dysfonctionnements internes.

Avantageusement, ce dispositif d'échange thermique permet une excellente homogénéité de température dans tout le réseau quelles que soient les différentes configurations de charge des équipements dissipatifs d'un satellite.

Avantageusement, ce dispositif d'échange thermique permet d'améliorer les interconnexions entre une structure diphasique et un réseau de caloducs du point de vue thermique.

Avantageusement, la largeur du dispositif facilite son repérage au sein d'un mur satellite, réduisant ainsi le risque d'être percé par mégarde par des opérateurs au sol.

Avantageusement, ce dispositif d'échange thermique présente une meilleure performance thermique en opération sous gravité (tests au sol) sous diverses orientations grâce à la présence de plusieurs cavités fluidiques indépendantes et couplées dans plusieurs directions à l'intérieur du dispositif. En particulier, les gradients thermiques sont réduits dans les panneaux du satellite grâce à ce dispositif. Il en résulte que les densités de puissance dissipée sont supérieures par rapport à des architectures standards typiques à plusieurs réseaux de caloducs indépendants.

Avantageusement, l'utilisation de ce dispositif d'échange thermique permet de réduire le nombre et la longueur des caloducs à implémenter dans un mur de satellite offrant ainsi une solution thermique complète moins encombrante. L'utilisation de ce dispositif d'échange thermique simplifie les opérations d'assemblage et le nombre de pièce à assembler car il suffit de souder les caloducs dans les ouvertures du dispositif.

Avantageusement, ce dispositif d'échange thermique fonctionne aussi bien pour des réseaux de structures diphasiques dans un même plan, par exemple au sein d'un même mur satellite, ou entre des plans différents, par exemple pour relier thermiquement des murs perpendiculaires.

Avantageusement, la fabrication de différents modes de réalisation de ce dispositif d'échange thermique peut être standardisée. Ces différents modes de réalisation peuvent définir des familles de dispositifs standards qui peuvent être utilisés de façon générique ou être combinées en fonction des besoins du réseau global.

Avantageusement, le dispositif d'échange thermique selon l'invention peut être monté sous un équipement électronique, le transfert de chaleur s'effectue dans un sens perpendiculaire au caloduc ce qui accroît son efficacité. En outre, la taille du dispositif d'échange thermique peut s'adapter à la taille des équipements.

Selon des modes de réalisation particuliers, le dispositif d'échange thermique comporte l'une ou plusieurs des caractéristiques suivantes :
- le premier canal et le deuxième canal comprennent chacun au moins un canal latéral ayant une extrémité terminale fermée, ledit au moins un canal latéral du premier canal s'étendant en parallèle et adjacent audit au moins un canal latéral du deuxième canal, lesdits canaux latéraux étant lesdites portions en échange thermique ;
- ledit au moins un canal latéral s'étend perpendiculairement à chaque canal ;
- ledit au moins un canal latéral s'étend selon une direction présentant un angle aigu par rapport à une partie de chaque canal ;
- le premier canal et le deuxième canal comportent une ouverture supplémentaire destinée à être connecté à un autre caloduc capillaire du premier réseau et respectivement du deuxième réseau ;
- ladite ouverture est située sur une première face dudit bloc massif, ladite ouverture supplémentaire est située sur une deuxième face dudit bloc massif, ladite première face étant perpendiculaire à ladite deuxième face ;
- ladite ouverture est située sur une première face dudit bloc massif, ladite ouverture supplémentaire est située sur une deuxième face dudit bloc massif, ladite première face étant sensiblement parallèle à ladite deuxième face ;
- ladite portion en échange thermique, du premier canal est située à une distance comprise entre 1 millimètre et 3 millimètres de ladite portion en échange thermique du deuxième canal ;
- ledit bloc massif comporte une face d'appui destinée à être fixée à un panneau d'un satellite artificiel, le premier canal et le deuxième canal sont ménagés dans un même plan, ledit plan étant parallèle à ladite face d'appui ;
- ledit bloc massif comporte une face d'appui destinée à être fixée à un panneau d'un satellite artificiel, le premier canal et le deuxième canal sont ménagés dans deux plans distincts, lesdits plans étant parallèles à ladite face d'appui ;
- le premier canal et le deuxième canal présentent une forme générale formant un motif parmi un motif de grecque, un motif de denture, un motif de lignes brisées, au moins une portion dudit premier canal et au moins une portion dudit deuxième canal étant lesdites portions en échange thermique ;
   - le premier canal comprend un axe longitudinal et une première cavité qui s'étend selon une direction perpendiculaire à l'axe longitudinal, le deuxième canal comprend un axe longitudinal et une deuxième cavité qui s'étend selon une direction perpendiculaire à l'axe longitudinal, lesdites première cavité et deuxième cavité étant lesdites portions en échange thermique ;
   - ledit bloc massif comporte une face d'appui destinée à être fixée à un panneau d'un satellite artificiel, le premier canal et le deuxième canal comprenant une première cavité et respectivement une deuxième cavité qui s'étendent chacune selon un plan parallèle à ladite face d'appui, lesdites première cavité et deuxième cavité étant lesdites portions en échange thermique ;
   - chaque canal comporte une unique ouverture destinée à être connectée à un caloduc.

L'invention a également pour objet un mur destiné à être monté dans un satellite artificiel, ledit mur comportant un panneau de support, un premier réseau de caloducs capillaires supporté par ledit panneau de support, un deuxième réseau de caloducs capillaires supporté par ledit panneau de support; caractérisé en ce qu'il comporte au moins un dispositif d'échange thermique conforme selon les caractéristiques ci-dessus, supporté par ledit panneau de support, chaque canal comportant deux ouvertures sur l'extérieur, le premier canal du dispositif d'échange thermique étant connecté à des caloducs capillaires du premier réseau, le deuxième canal du dispositif d'échange thermique étant connecté à des caloducs capillaires du deuxième réseau.

Selon des modes de réalisation particuliers, le mur comporte l'une ou plusieurs des caractéristiques suivantes :
- le mur comporte au moins un équipement électronique fixé sur ledit panneau de support, en contact thermique direct ou indirect avec ledit dispositif d'échange thermique ;
- le mur comprend en outre des angles et les caloducs capillaires du premier réseau sont fixés auxdits angles de manière à former une configuration en forme de peigne ;
- Le mur comprend en outre des angles, et les caloducs capillaires du premier réseau sont fixés auxdits angles de manière à former une configuration en forme de S ;
- le mur comprend en outre des angles, et les caloducs capillaires du premier réseau sont fixés auxdits angles de manière à former une configuration en forme de matrice, c'est-à-dire de quadrillage.

Enfin, l'invention a également pour objet un assemblage d'un premier mur et d'un deuxième mur destiné à être monté dans un satellite artificiel, le premier mur comportant un premier panneau et au moins un premier réseau de caloducs capillaires, le deuxième mur comportant un deuxième panneau et au moins un deuxième réseau de caloducs capillaires, ledit assemblage comportant en outre un dispositif d'échange thermique ayant les caractéristique mentionnées ci-dessus et dans lequel ladite ouverture est située sur une première face dudit bloc massif, ladite ouverture supplémentaire étant située sur une deuxième face dudit bloc massif, ladite première face étant perpendiculaire à ladite deuxième face, le dispositif d'échange thermique étant supporté par l'un desdits premier panneau et deuxième panneau.

L'invention sera mieux comprise à la lecture de la description qui va suivre, donnée uniquement à titre d'exemple et faite en se référant aux figures sur lesquelles :
- La figure 1 est une vue en perspective d'un dispositif d'échange thermique selon un premier mode de réalisation de la présente invention ;
- La figure 2 est une vue en coupe du dispositif illustré sur la figure 1 selon un plan de coupe horizontal illustré sur la figure 1 ;
- La figure 3 est une vue en coupe du dispositif illustré sur la figure 1 selon le plan de coupe vertical illustré sur la figure 1 ;
- La figure 4 est une vue en coupe d'un exemple d'implémentation de deux dispositifs d'échange thermique selon le premier mode de réalisation de l'invention ; le plan de coupe étant un plan de coupe horizontal identique au plan de coupe de la figure 2 ;
- Les figures 5 à 9, 14 et 15 sont des vues en coupe de dispositif d'échange thermique selon neuf modes de réalisation différents de l'invention, respectivement deuxième à huitième, dixième et onzième modes de réalisation selon un plan de coupe horizontal similaire au plan de coupe illustré sur la figure 2 ;
- La figure 10 est une vue en perspective d'un dispositif d'échange thermique selon un neuvième mode de réalisation de l'invention ;
- Les figures 11 à 13 sont des vues en coupe du dispositif d'échange thermique illustré sur la figure 10 ;
- La figure 16 est une vue en perspective d'un dispositif d'échange thermique selon un douzième mode de réalisation de l'invention ;
- Les figures 17 et 18 sont des vues de face de mur de satellite artificiel comprenant un dispositif d'échange thermique selon la présente invention ; et
- La figure 19 est une vue en perspective d'un assemblage selon l'invention.

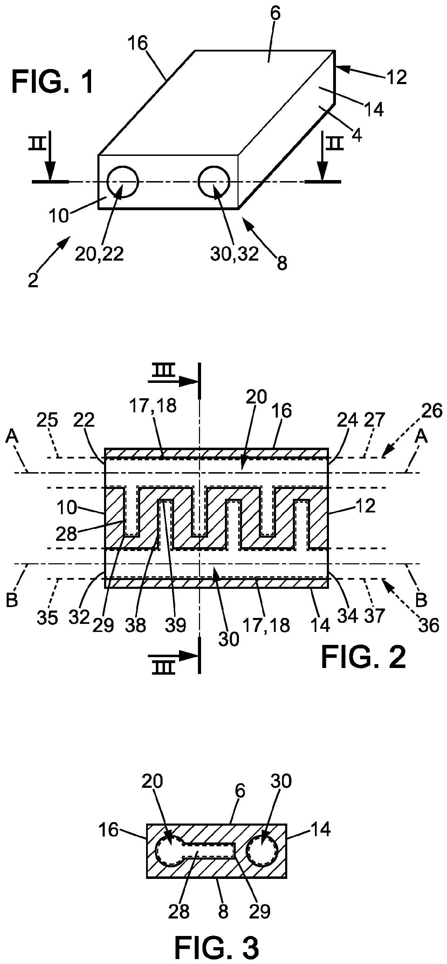

Dans la description qui va suivre, les termes « haut », « bas », « inférieur », « supérieur », sont définis lorsque le dispositif d'échange thermique selon l'invention est disposé comme illustré sur la figure 1, et ne sont nullement limitatifs.

En référence aux figures 1 à 3, le dispositif d'échange thermique 2 selon un premier mode de réalisation de l'invention est constitué par un bloc massif 4 ayant préférentiellement une forme de parallélépipède plat ou autre.

Le bloc massif 4 comprend une face principale supérieure 6, une face principale inférieure 8, une face avant 10, une face arrière 12 et deux faces latérales 14, 16.

La face principale supérieure 6 du dispositif d'échange thermique 2 et/ou sa face principale inférieure 8 sont des faces d'appui destinées à être fixée sur un panneau d'un satellite artificiel ou à l'intérieur d'un panneau, par exemple à l'intérieur d'un panneau en nid d'abeilles. Ces faces sont destinées à être en contact direct ou indirect avec un ou plusieurs équipements électroniques ou avec un autre dispositif d'échange thermique 2. Ces faces constituent la semelle du dispositif d'échange thermique 2.

Le bloc massif 4 est traversé par un premier canal 20 rectiligne et un deuxième canal 30 rectiligne débouchant chacun sur une ouverture 22, 32 pratiquée sur la face avant 10 et sur une ouverture supplémentaire 24, 34 pratiquée sur la face arrière 12.

L'ouverture 22 du premier canal est destinée à être connectée à un caloduc capillaire 25 d'un premier réseau 26 de caloducs capillaires, représenté en traits en pointillés sur la figure 2. L'ouverture supplémentaire 24 du premier canal est destinée à être connectée à un autre caloduc capillaire 27 du premier réseau de caloducs.

De la même façon, l'ouverture 32 du deuxième canal est destinée à être connectée à un caloduc capillaire 35 d'un deuxième réseau 36 de caloducs capillaires, représenté en traits en pointillés sur la figure 2. L'ouverture supplémentaire 34 du deuxième canal est destinée à être connectée à un autre caloduc capillaire 37 du deuxième réseau de caloducs 36.

Le premier canal 20 et le deuxième canal 30 présentent chacun une paroi interne 17 munie d'une structure capillaire 18 représentée schématiquement par des traits interrompus. Cette structure capillaire 18 est, par exemple, un treillis réalisé par chauffage d'une poudre métallique à l'aide d'un laser.

En variante, cette structure capillaire 18 peut être réalisée par des mailles, une structure poreuse ou des rainures axiales.

Le premier canal 20 présente un axe longitudinal A-A. Le deuxième canal 30 possède un axe longitudinal B-B qui est parallèle à l'axe A-A.

Le premier canal 20 comporte des canaux latéraux 28 ayant une extrémité fermée 29. Les canaux latéraux 28 s'étendent perpendiculairement à l'axe A-A du premier canal 20 en direction du deuxième canal 30.

De la même façon, le deuxième canal 30 comporte également des canaux latéraux 38 ayant une extrémité fermée 39. Les canaux latéraux 38 s'étendent perpendiculairement à l'axe B-B du deuxième canal 30 et en direction du premier canal 20.

Les canaux latéraux 28 du premier canal et les canaux latéraux 38 du deuxième canal sont situés alternativement les uns après les autres. Ainsi, à l'exception des canaux latéraux 28, 38 d'extrémité (situés le plus proche de la face avant 10 et de la face arrière 12) chaque canal latéral 28 du premier canal est situé entre deux canaux latéraux 38 du deuxième canal et inversement. Chaque canal latéral 28 du premier canal est situé à proximité d'un canal latéral 38 du deuxième canal. Plus spécifiquement, chaque canal latéral 28 du premier canal est situé à une distance environ comprise entre 1 mm et 3 mm d'un canal latéral 38 du deuxième canal. Dans ce mode de réalisation, chaque canal latéral 28 du premier canal s'étend parallèlement à un canal latéral 38 du deuxième canal. Lorsque le dispositif d'échange thermique 2 est connecté au premier réseau 26 de caloducs et au deuxième réseau 36 de caloducs, ces canaux latéraux disposés à proximité les uns des autres permettent un transfert de chaleur du fluide caloporteur contenu dans le premier réseau 26 vers le fluide caloporteur contenu dans le deuxième réseau 36. Ces canaux latéraux 28, 38 constituent des portions de canaux d'un réseau en échange thermique avec des portions de canaux d'un autre réseau. Ces échanges thermiques assurent une homogénéisation de la température des deux réseaux et garantissent une redondance de la fonction de transport et d'évacuation de chaleur. En cas de disfonctionnement d'un réseau de caloducs, par exemple, en raison du percement d'un caloduc, l'autre réseau de caloducs peut assurer la fonction.

La longueur et le nombre des canaux latéraux 28, 38 sont variables pour permettre de répondre au mieux aux besoins de la mission satellite.

Le dispositif d'échange thermique 2 est préférentiellement fabriqué dans un matériau homogène afin d'assurer une homogénéité dans la conduction thermique, ce matériau ayant une conductivité thermique élevée. Il est par exemple réalisé dans un alliage d'aluminium, tel que par exemple AlSi10Mg. Dans ce cas, il peut être réalisé par un procédé de fabrication additive (en anglais « Additive Layer Manufacturing »).

En variante, le dispositif d'échange thermique 2 peut être réalisé en plusieurs matériaux pour lui conférer des propriétés différentes en fonction de la zone du dispositif considérée. Par exemple, le dispositif d'échange thermique 2 peut comprendre un premier matériau pour sa partie interne et un autre matériau pour la face qui va constituer sa semelle à savoir sa face principale supérieure 6 ou sa face principale inférieure 8.

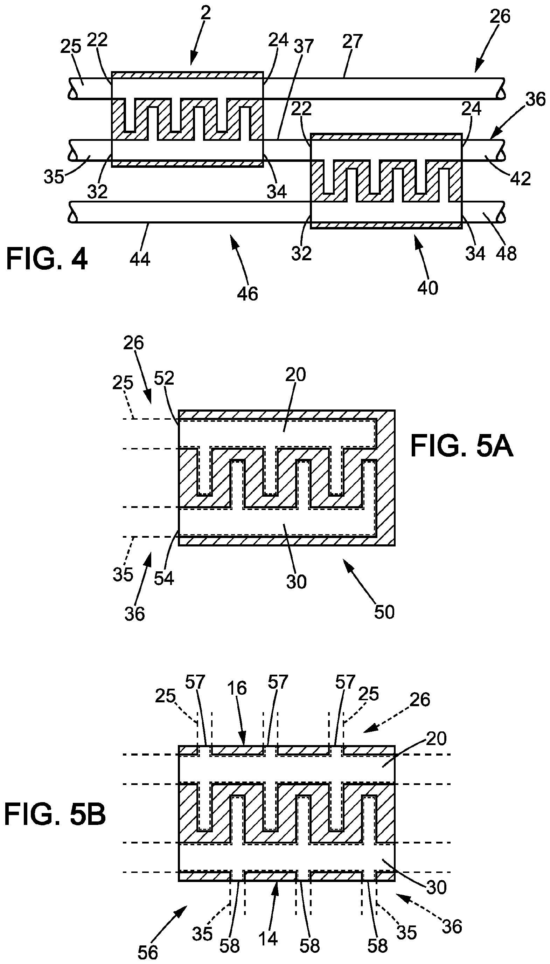

La figure 4 illustre un exemple d'implémentation de deux dispositifs d'échange thermique 2, 40 selon le premier mode de réalisation pour permettre le transfert de chaleur entre trois réseaux de caloducs 26, 36, 46. Dans cet exemple, les caloducs 25 et 27 du premier réseau 26 sont soudés à l'ouverture 22 et respectivement à l'ouverture supplémentaire 24 du premier canal d'un premier dispositif 2. Les caloducs 35 et 37 du deuxième réseau 36 sont soudés à l'ouverture 32 et à l'ouverture supplémentaire 34 du deuxième canal du premier dispositif 2. Le caloduc 37 du deuxième réseau est soudé à l'ouverture 22 du premier canal du deuxième dispositif 40. Un caloduc 42 est soudé à l'ouverture supplémentaire 24 du premier canal du deuxième dispositif 40. Des caloducs 44 et 48 d'un troisième réseau 46 sont soudés à l'ouverture 32 et respectivement à l'ouverture supplémentaire 34 du deuxième dispositif.

Le premier dispositif d'échange thermique 2 assure le transport de chaleur entre le premier réseau 26 et le deuxième réseau 36. Le deuxième dispositif d'échange thermique 40 assure le transport de chaleur entre le deuxième réseau 36 et le troisième réseau 46. Les dispositifs d'échange thermique 2, 40 selon l'invention permettent une excellente homogénéisation thermique dans l'ensemble des trois réseaux de caloducs 26, 36, 46.

Les figures 5 à 16 représentent différents modes de réalisation de dispositif d'échange thermique. Ces différents modes de réalisation comprennent des éléments identiques ou similaires aux éléments du dispositif d'échange thermique 2 selon le premier mode de réalisation de l'invention. Ces éléments identiques ou similaires portent les mêmes références que dans la description du dispositif d'échange thermique 2 selon le premier mode de réalisation et ne seront pas décrits une seconde fois. Seules les caractéristiques particulières à chacun de ces modes de réalisation sont décrites ci-après.

En référence à la figure 5A, le premier canal 20 et le deuxième canal 30 du dispositif d'échange thermique 50 **selon le deuxième mode de réalisation** comportent une unique ouverture 52, 54 débouchant sur la face avant 10. Un tel dispositif d'échange thermique 50 est destiné à être connecté à un unique caloduc 25 du premier réseau et à un unique caloduc 35 du deuxième réseau. Il est propre à être connecté en extrémité des premier 26 et deuxième 36 réseaux. Ce deuxième mode de réalisation peut être utilisé en complément du premier mode de réalisation présenté dans la Figure 4 en étant connecté en extrémité des premier 26 et troisième 46 réseaux.

En référence à la figure 5B, le premier canal 20 du dispositif d'échange thermique 56 **selon un troisième mode de réalisation** comporte en outre une des ouvertures latérales 57 débouchant sur la face latérale 16 la plus proche du premier canal. Les ouvertures latérales 57 sont destinées à être connectées à des caloducs capillaires latéraux 25 du premier réseau 26. De la même façon, le deuxième canal 30 du dispositif 56 comporte des ouvertures latérales 58 débouchant sur la face latérale opposée 14. Ces ouvertures latérales 58 sont destinées à être connectées à des caloducs capillaires latéraux 35 du deuxième réseau 36.

Avantageusement, ce mode de réalisation permet de réaliser deux réseaux redondants disposés dans un même plan. Ce dispositif d'échange thermique présente une faible hauteur. La distance entre l'équipement dissipatif et le fluide caloporteur des deux réseaux est réduite. En conséquence, il y a moins de perte thermique au niveau des échanges entre deux réseaux. Il en résulte une meilleure évacuation de la chaleur du panneau.

Selon ce mode de réalisation, le premier et le deuxième réseaux présentent une forme de matrice. En alternative, une configuration en étoile peut également être envisagée.

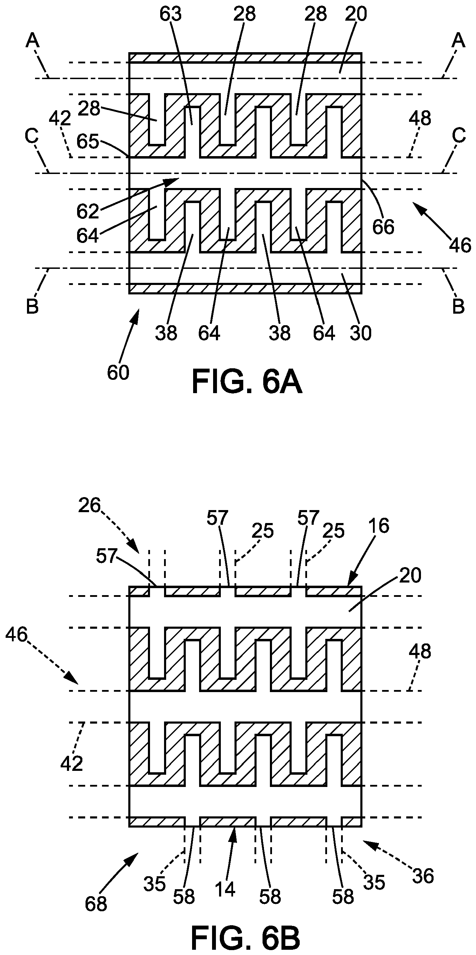

En référence à la figure 6A, le dispositif d'échange thermique 60 selon le **quatrième mode de réalisation** comporte un premier canal 20, un deuxième canal 30 et un troisième canal 62 d'axes A-A, B-B et respectivement C-C parallèles entre eux. Le premier canal 20 et le deuxième canal 30 sont situés de part et d'autre du troisième canal 62. Ils présentent des formes identiques aux formes du premier canal 20 et respectivement deuxième canal 30 du dispositif 2 selon le premier mode de réalisation.

Le troisième canal 62 comporte des canaux latéraux 63, 64 qui s'étendent alternativement d'un côté et de l'autre côté de son axe C-C. Certains canaux latéraux 63 du troisième canal s'étendent parallèlement et à proximité de canaux latéraux 28 du premier canal. D'autres canaux latéraux 64 du troisième canal s'étendent parallèlement et à proximité de canaux latéraux 38 du deuxième canal.

Le troisième canal comporte une ouverture 65 et une ouverture supplémentaire 66 destinées à être connectées à des caloducs 42, 48 d'un troisième réseau 46. Avantageusement, ce troisième mode de réalisation assure un échange thermique entre trois réseaux de caloducs capillaires qui ne sont pas en communication fluidique.

En référence à la figure 6B, le dispositif d'échange thermique 68 selon le **cinquième mode de réalisation** est similaire au dispositif d'échange thermique 60 selon le quatrième mode de réalisation à l'exception du fait qu'il comporte en outre des ouvertures latérales 57 débouchant sur la face latérale 16 la plus proche du premier canal 20. Les ouvertures latérales 57 sont destinées à être connectées à des caloducs capillaires latéraux 25 du premier réseau 26. De la même façon, le deuxième canal 30 du dispositif 68 comporte des ouvertures latérales 58 débouchant sur la face latérale opposée 14. Ces ouvertures latérales 58 sont destinées à être connectées à des caloducs capillaires latéraux 35 du deuxième réseau 36.

Ce cinquième mode de réalisation présente les mêmes avantages que le troisième mode de réalisation.

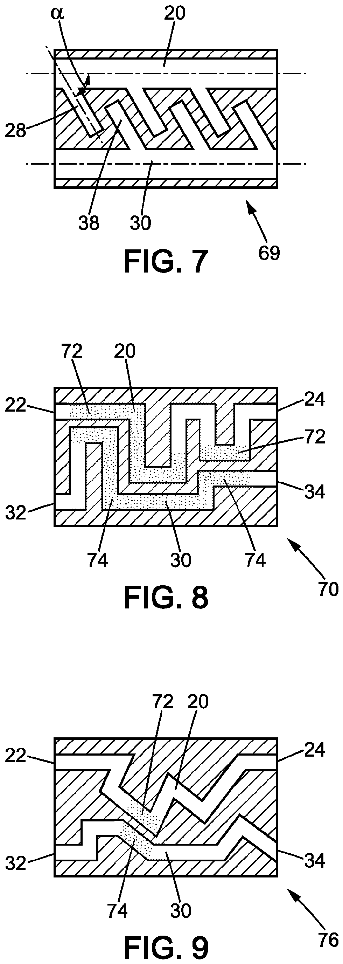

En référence à la figure 7, le dispositif d'échange thermique 69 selon le **sixième mode de réalisation** est identique au dispositif d'échange thermique 2 selon le premier mode de réalisation, à l'exception du fait que les canaux latéraux 28 et 38 s'étendent en épi par rapport au premier canal 20 et respectivement au deuxième canal 30. En particulier, les canaux latéraux 28 présentent un angle aigu α par rapport à la partie droite du premier canal sur l'exemple de réalisation illustré sur la figure 7. De la même façon, les canaux latéraux 38 du deuxième canal 30 présentent le même angle aigu α par rapport à la partie gauche du deuxième canal sur l'exemple de réalisation illustré sur la figure 7. Comme pour le premier mode de réalisation, les canaux latéraux 28 et 38 s'étendent parallèlement et à proximité les uns aux autres. En variante, la forme en épi peut être remplacée par une forme en arc de cercle.

Dans le dispositif d'échange thermique 70 selon le septième **mode de réalisation** illustré sur la figure 8, le premier canal 20 et le deuxième canal 30 ne sont pas rectilignes et ils ne comportent pas de canaux latéraux 28, 38. Dans ce mode de réalisation, le premier canal 20 et le deuxième canal 30 présentent une forme générale formant un motif de grecque irrégulier ou un motif de denture irrégulière. Des portions 72 du premier canal sont situées à proximité de portions 74 du deuxième canal 30. Le fluide caloporteur du premier réseau 26 traversant les portions 72 du dispositif d'échange thermique 70 est en échange thermique avec le fluide caloporteur traversant les portions 74 du deuxième canal 30. Ces portions 72, 74 à proximité les unes des autres sont appelées portions en échange thermique dans la présente demande de brevet. Pour faciliter la compréhension de ce mode de réalisation, les portions 72 du premier canal et les portions 74 du deuxième canal sont grisées sur la figure 8.

Dans le dispositif d'échange thermique 76 selon le huitième **mode de réalisation** illustré sur la figure 9, le premier canal 20 et le deuxième canal 30 ne sont pas rectilignes et ils ne comportent pas de canaux latéraux 28, 38. Dans ce mode de réalisation, le premier canal 20 et le deuxième canal 30 présentent une forme générale de lignes brisées. Des portions 72 du premier canal sont situées à proximité de portions 74 du deuxième canal 30. Le fluide caloporteur du premier réseau 26 traversant les portions 72 du dispositif d'échange thermique 70 est en échange thermique avec le fluide caloporteur traversant les portions 74 du deuxième canal 30.

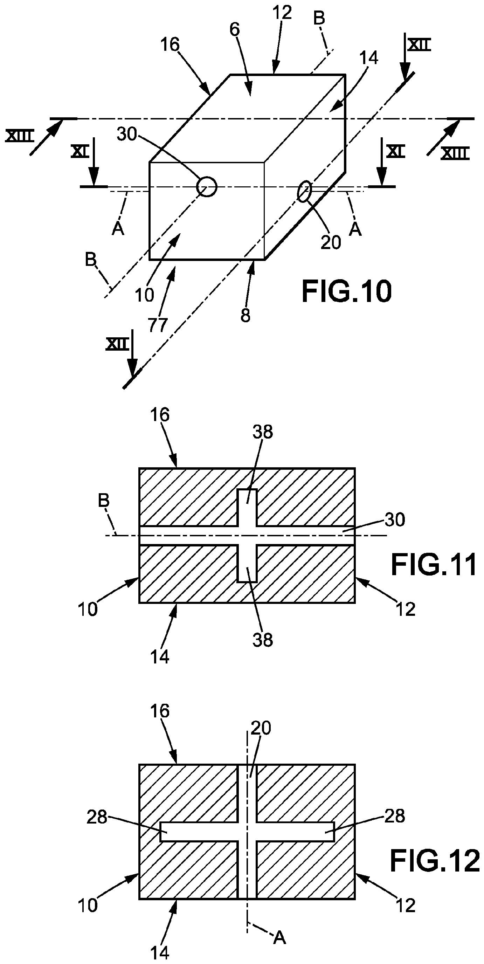

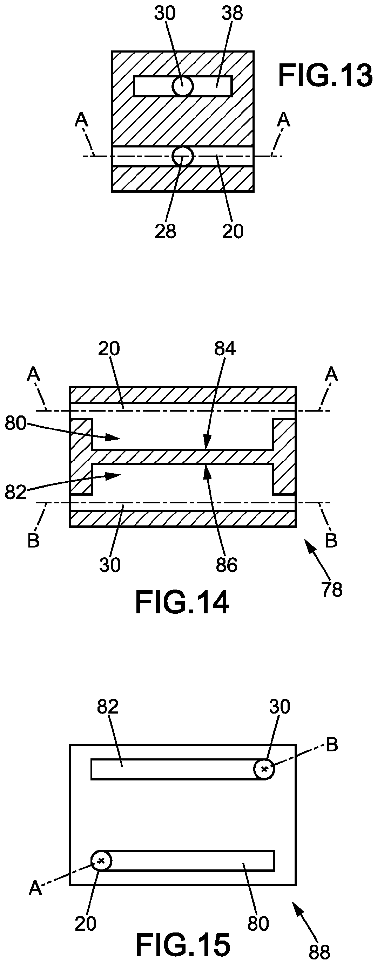

En référence aux figures 10 à 13, le dispositif d'échange thermique 77 selon le **neuvième mode de réalisation** présente une hauteur supérieure au dispositif d'échange thermique 2 selon le premier mode de réalisation. Dans le dispositif d'échange thermique 77, le premier canal 20 s'étend transversalement de la face latérale 14 à la face latérale 16. Il comporte deux canaux latéraux 28 qui s'étendent de part et d'autre du premier canal. Les canaux latéraux 28 et le premier canal 20 s'étendent dans un premier plan parallèle aux faces principales 6, 8. Le deuxième canal 30 s'étend longitudinalement de la face avant 10 à la face arrière 12. Il comporte deux canaux latéraux 38 qui s'étendent de part et d'autre du deuxième canal. Les canaux latéraux 38 et le deuxième canal 30 s'étendent dans un deuxième plan parallèle aux faces principales 6, 8. Le premier plan est situé au-dessus du deuxième plan. Les canaux latéraux 38 du deuxième canal s'étendent au-dessus du premier canal 20, comme visible sur le plan de coupe de la figure 13. En fonctionnement, le fluide caloporteur contenu dans les canaux latéraux 38 est en échange thermique avec le fluide calorifique contenu dans le premier canal 20. De la même façon, les canaux latéraux 28 du premier canal s'étendent au-dessus du deuxième canal 30 de sorte que le fluide calorifique contenu dans les canaux latéraux 28 est en échange thermique avec le fluide traversant le deuxième canal 30.

Avantageusement, le dispositif d'échange thermique 77 selon le **neuvième mode de réalisation** permet un échange thermique entre deux réseaux de caloducs situés dans des plans différents.

En référence à la figure 14, le dispositif d'échange thermique 78 selon le **dixième mode de réalisation** est identique au dispositif d'échange thermique 2 selon le premier mode de réalisation, à l'exception du fait que les canaux latéraux 28 du premier canal 20 et les canaux latéraux du deuxième canal 30 sont remplacés par une première cavité 80 et respectivement par une deuxième cavité 82 qui s'étendent selon une direction perpendiculaire à l'axe A-A du premier canal 20 et à l'axe B-B du deuxième canal 30. Les cavités 80 et 82 forment un élargissement des canaux 20 et respectivement 30. La première cavité 80 s'étend en direction de la deuxième cavité 82. De la même façon, la deuxième cavité 82 s'étend en direction de la première cavité 80. Le fond 84 de la première cavité est situé à proximité du fond 86 de la deuxième cavité de sorte que le fluide caloporteur contenu dans la première cavité soit en échange thermique avec le fluide caloporteur contenu dans la deuxième cavité. Ainsi, la première cavité 80 et la deuxième cavité 82 forment des portions en échange thermique au sens de la présente demande de brevet.

En référence à la figure 15, le dispositif d'échange thermique 88 selon le **onzième mode de réalisation** est identique au dispositif d'échange thermique 2 selon le premier mode de réalisation à l'exception du fait que :
- le dispositif d'échange thermique 88 selon le onzième mode de réalisation présente une hauteur supérieure, le premier canal 20 s'étendant dans un plan différent du deuxième canal 30.
- les canaux latéraux 28 du premier canal 20 et les canaux latéraux du deuxième canal 30 sont remplacés une première cavité 80 et respectivement une deuxième cavité 82 qui s'étendent selon une direction perpendiculaire à l'axe A-A du premier canal 20 et à l'axe B-B du deuxième canal 30. La première 80 et la deuxième 82 cavités s'étendent parallèlement à la face principale supérieure 6.
La première cavité 80 s'étend au-dessus de la deuxième cavité 82. L'échange thermique entre le fluide caloporteur du premier réseau 26 et le fluide caloporteur du deuxième réseau 36 est réalisé par l'intermédiaire de la première cavité 80 et de la deuxième cavité 82.

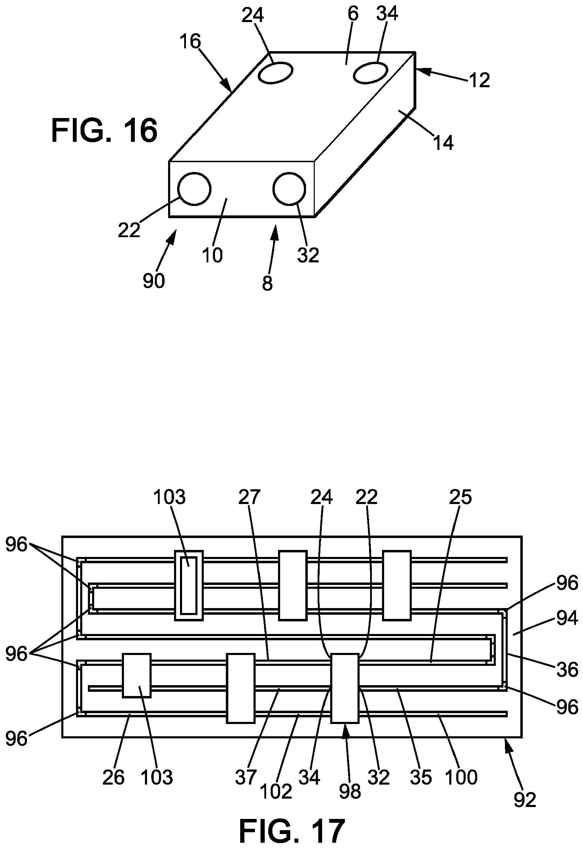

En référence à la figure 16, le dispositif d'échange thermique 90 selon le **douzième mode de réalisation** est identique au dispositif d'échange thermique 2 selon le premier mode de réalisation à l'exception du fait que l'ouverture supplémentaire 24 du premier canal et l'ouverture supplémentaire 34 du deuxième canal sont pratiqués sur la face principale supérieure 6 du dispositif d'échange thermique 90. Avantageusement, un tel dispositif d'échange thermique permet, de plus, de relier deux caloducs qui s'étendent perpendiculairement l'un par rapport à l'autre. Ce dispositif d'échange thermique 90 peut, par exemple, être agencé dans le coin formé par un mur anti-Terre et un mur Nord d'un satellite artificiel. Dans ce cas, l'ouverture 22 du premier canal et l'ouverture 32 du deuxième canal sont reliées à des caloducs fixés au mur anti-Terre. L'ouverture 24 du premier canal et l'ouverture 34 du deuxième canal sont reliées à des caloducs fixés au mur Nord.

En fonction de l'emplacement des équipements électroniques, de l'espacement entre eux et de leur surface de dissipation, il est possible de combiner plusieurs dispositifs d'échange thermique tels que décrits ci-dessus entre eux pour coupler différemment des caloducs entre eux.

En référence à la figure 17, la présente invention concerne un mur 92 propre à être monté dans un satellite artificiel. Ce mur 92 est constitué par un panneau de support 94 portant des caloducs capillaires 25, 27 d'un premier réseau 26, des caloducs capillaires 35, 37 d'un deuxième réseau 36 et cinq dispositifs d'échange thermique 98 selon la présente invention facilitant le transfert de chaleur entre les fluides caloporteurs des deux réseaux.

Le fluide caloporteur du premier réseau 26 de caloducs n'est pas en communication fluidique avec le fluide caloporteur du deuxième réseau 36 de caloducs.

Le fluide caloporteur contenu dans chaque réseau est typiquement de l'ammoniac. En variante, il est, par exemple, constitué par de l'éthanol ou du méthanol.

Selon le mode de réalisation représenté, les caloducs capillaires du premier réseau 26 sont fixés les uns aux autres et à des noeuds capillaires 96 pour présenter la forme générale d'un S. De la même façon, les caloducs capillaires du deuxième réseau 36 sont fixés les uns aux autres et à des noeuds capillaires 96 pour présenter la forme générale d'un S.

Les noeuds capillaires 96 sont, par exemple réalisés dans un alliage d'aluminium tel que par exemple AlSi10Mg par un procédé de fabrication additive.

Dans ce mode de réalisation, les noeuds capillaires 96 présentent la forme d'un L. En variante, ces noeuds capillaires en forme d'un L peuvent être remplacés par un dispositif d'échange thermique contenant un canal en forme de L. Les noeuds capillaires 96 ainsi que les dispositifs de transfert thermique permettant de créer un angle entre la direction de deux caloducs qui y sont fixés, sont appelés des angles au sens de l'invention.

Seul le dispositif d'échange thermique 98 illustré en bas à droite de la figure sera décrit en détail. Ce dispositif d'échange thermique 98 comporte un premier canal, un deuxième canal et un troisième canal.

Le premier canal débouche sur une ouverture 22 et sur une ouverture supplémentaire 24. Un caloduc capillaire 25 du premier réseau 26 est fixé, par un procédé d'assemblage tel que le collage ou le soudage, à l'ouverture 22. Un caloduc capillaire 27 du premier réseau 26 est fixé à l'ouverture supplémentaire 24.

Le deuxième canal débouche sur une ouverture 32 et sur une ouverture supplémentaire 34. Un caloduc capillaire 35 du deuxième réseau 36 est fixé, à l'ouverture 32. Un caloduc capillaire 37 du deuxième réseau 36 est fixé à l'ouverture supplémentaire 34.

Le troisième canal débouche sur deux ouvertures connectées à des caloducs capillaires du premier réseau 26.

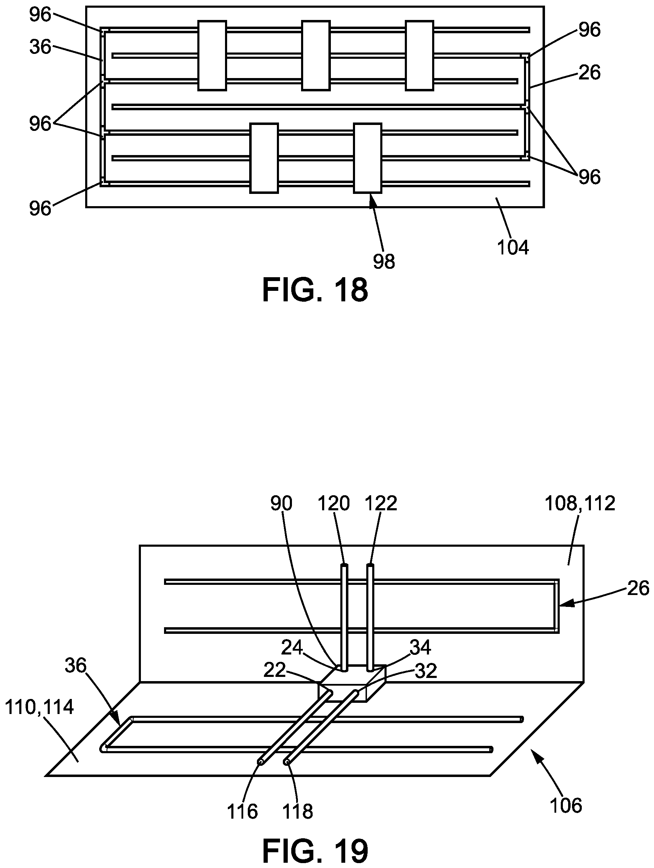

Selon une variante de réalisation illustrée sur la figure 18, les caloducs capillaires du premier 26 et du deuxième 36 réseaux sont montés sur le mur 104 et sont fixés les uns aux autres et à des noeuds capillaires 96 pour présenter chac
un la forme générale d'un peigne. Dans ce mode de réalisation, certains noeuds capillaires 96 présentent la forme d'un T.

Le mur 92 comporte en outre des équipements électroniques 103. A titre d'exemple sur la figure 17, un équipement électronique 103 a été représenté disposé sur des canaux capillaires de deux réseaux. Un autre équipement électronique 103 a été représenté monté en contact direct sur un dispositif d'échange thermique 98.

Selon une variante non représentée, les caloducs capillaires du premier réseau et/ou du deuxième réseau sont fixés les uns aux autres et à des noeuds capillaires 96 pour présenter la forme générale d'une matrice. Pour réaliser ce mode de réalisation des noeuds capillaires présentant la forme d'étoile ou des dispositifs d'échange thermique selon le troisième mode de réalisation ou selon le cinquième mode de réalisation peuvent être employés (Cf. Figure 5B et 6B).

En variante, les caloducs capillaires et les dispositifs d'échange thermique 98 sont montés à l'intérieur du panneau de support. Dans ce cas, les équipements électroniques sont montés sur le panneau en contact indirect avec le dispositif d'échange thermique 98.

En variante, deux dispositifs d'échange thermique peuvent être montés l'un sur l'autre.

En référence à la figure 19, la présente invention se rapporte également à un assemblage 106 d'un premier mur 108 et d'un deuxième mur 110 destiné à être monté dans un satellite artificiel.

Le premier mur 108 comporte un premier panneau 112 qui porte un premier réseau 26 de caloducs capillaires. Le deuxième mur 110 comporte un deuxième panneau 114 qui porte un deuxième réseau 36 de caloducs capillaires. L'assemblage 106 comporte en outre un dispositif d'échange thermique 90 selon le douzième mode de réalisation de l'invention.

Ce dispositif d'échange thermique 90 est porté par le premier panneau 112 ou le deuxième panneau 114. Il est installé au coin formé entre les deux panneaux.

Deux caloducs 116, 118 sont fixés dans les ouvertures 22, 32 du dispositif d'échange thermique 90. Ces caloducs 116, 118 sont en contact thermique avec les caloducs du deuxième réseau 36.

Deux caloducs 120, 122 sont fixés dans les ouvertures 24, 34 du dispositif d'échange thermique 90. Ces caloducs 120, 122 sont en contact thermique avec les caloducs du premier réseau 26.

En variante, les caloducs 116 et 118 peuvent être connectés à un dispositif d'échange thermique 98 présenté dans les figures 17 et 18.

En variante, les caloducs 120 et 122 peuvent être connectés à un dispositif d'échange thermique 98 présenté dans les figures 17 et 18.

Cet assemblage permet avantageusement de transporter de la chaleur d'un mur du satellite à l'autre.

En variante, les dispositifs d'échange thermique selon le troisième mode de réalisation et le cinquième mode de réalisation sont utilisés pour réaliser des angles.

## Revendications

1. Dispositif d'échange thermique (2, 40, 50, 56, 60, 68, 69, 70, 76, 77, 78, 88, 90) destiné à assurer un échange thermique entre un fluide caloporteur d'un premier réseau (26) de caloducs capillaires (25, 27) et un fluide caloporteur d'un deuxième réseau (36) de caloducs capillaires (35, 37), **caractérisé en ce qu'**il comporte un bloc massif (4) muni d'au moins un premier canal (20) et d'un deuxième canal (30) indépendant du premier canal (20), chaque canal (20, 30) ayant une structure interne capillaire (18), le premier canal (20) ayant au moins une ouverture (22, 52) destinée à être connectée à un caloduc capillaire (25) du premier réseau (26), le deuxième canal (30) ayant au moins une ouverture (32, 54) destinée à être connectée à un caloduc capillaire (35) du deuxième réseau (36), le premier canal (20) ayant une portion (28, 80) située à proximité d'une portion (38, 82) du deuxième canal de sorte que, lorsque le dispositif d'échange thermique (2, 40, 50, 56, 60, 68, 69, 70, 76, 77, 78, 88, 90) est connecté au premier réseau (26) et au deuxième réseau (36), le fluide caloporteur du premier réseau (26) soit en échange thermique avec le fluide caloporteur du deuxième réseau (36), par l'intermédiaire desdites portions en échange thermique (28, 38, 80, 82).

2. Dispositif d'échange thermique (2, 40, 50, 56, 60, 68, 69, 77) selon la revendication 1, dans lequel le premier canal (20) et le deuxième canal (30) comprennent chacun au moins un canal latéral (28, 38) ayant une extrémité terminale fermée (29, 39), ledit au moins un canal latéral (28) du premier canal s'étendant en parallèle et adjacent audit au moins un canal latéral (38) du deuxième canal, lesdits canaux latéraux (28, 38) étant lesdites portions en échange thermique.

3. Dispositif d'échange thermique (2, 40, 50, 56, 60, 68, 77) selon la revendication 2, dans lequel ledit au moins un canal latéral (28, 38) s'étend perpendiculairement à chaque canal (20, 30).

4. Dispositif d'échange thermique (69) selon la revendication 2, dans lequel ledit au moins un canal latéral (28, 38) s'étend selon une direction présentant un angle aigu (a) par rapport à une partie de chaque canal (20, 30).

5. Dispositif d'échange thermique (2, 40, 56, 60, 68, 69, 70, 76, 77, 78, 88, 90) selon l'une quelconque des revendications 1 à 4, dans lequel le premier canal (20) et le deuxième canal (30) comportent une ouverture supplémentaire (24, 34) destinée à être connecté à un autre caloduc capillaire (27, 37) du premier réseau (26) et respectivement du deuxième réseau (36).

6. Dispositif d'échange thermique (90) selon la revendication 5, dans lequel ladite ouverture (22, 32) est située sur une première face (10) dudit bloc massif (4), ladite ouverture supplémentaire (24, 34) est située sur une deuxième face (6, 8) dudit bloc massif, ladite première face (10) étant perpendiculaire à ladite deuxième face (6, 8).

7. Dispositif d'échange thermique (2, 40, 56, 60, 68, 69, 70, 76, 78, 77, 88) selon la revendication 5, dans lequel ladite ouverture (22, 32) est située sur une première face (10) dudit bloc massif (4), ladite ouverture supplémentaire (24, 34) est située sur une deuxième face (12) dudit bloc massif, ladite première face (10) étant sensiblement parallèle à ladite deuxième face (12).

8. Dispositif d'échange thermique (2, 40, 50, 56, 60, 68, 69, 70, 76, 77, 78, 88, 90) selon l'une quelconque des revendications 1 à 7, dans lequel ladite portion en échange thermique (28), du premier canal est située à une distance comprise entre 1 millimètre et 3 millimètres de ladite portion en échange thermique (38) du deuxième canal.

9. Dispositif d'échange thermique (2, 40, 56, 60, 68, 69, 70, 76, 78, 90) selon l'une quelconque des revendications 1 à 8, dans lequel ledit bloc massif (4) comporte une face d'appui (6, 8) destinée à être fixée à un panneau d'un satellite artificiel (94), le premier canal (20) et le deuxième canal (30) sont ménagés dans un même plan, ledit plan étant parallèle à ladite face d'appui (6, 8).

10. Dispositif d'échange thermique (77, 88) selon l'une quelconque des revendications 1 à 7, dans lequel ledit bloc massif (4) comporte une face d'appui (6, 8) destinée à être fixée à un panneau (94) d'un satellite artificiel, le premier canal (20) et le deuxième canal (30) sont ménagés dans deux plans distincts, lesdits plans étant parallèles à ladite face d'appui (6, 8).

11. Dispositif d'échange thermique (70, 76) selon l'une quelconque des revendications 1 et 5 à 10, dans lequel le premier canal (20) et le deuxième canal (30) présentent une forme générale formant un motif parmi un motif de grecque, un motif de denture, un motif de lignes brisées, au moins une portion (72) dudit premier canal (20) et au moins une portion (74) dudit deuxième canal (30) étant lesdites portions en échange thermique.

12. Dispositif d'échange thermique (78) selon l'une quelconque des revendications 1 et 5 à 10, dans lequel le premier canal (20) comprend un axe longitudinal (A-A) et une première cavité (80) qui s'étend selon une direction perpendiculaire à l'axe longitudinal (A-A) et dans lequel le deuxième canal (30) comprend un axe longitudinal (B-B) et une deuxième cavité (82) qui s'étend selon une direction perpendiculaire à l'axe longitudinal (B-B), lesdites première cavité (80) et deuxième cavité (82) étant lesdites portions en échange thermique.

13. Dispositif d'échange thermique (88) selon l'une quelconque des revendications 1 et 5 à 10, dans lequel ledit bloc massif (4) comporte une face d'appui (6, 8) destinée à être fixée à un panneau d'un satellite artificiel, le premier canal (20) et le deuxième canal (30) comprenant une première cavité (80) et respectivement une deuxième cavité (82) qui s'étendent chacune selon un plan parallèle à ladite face d'appui (6, 8), lesdites première cavité (80) et deuxième cavité (82) étant lesdites portions en échange thermique.

14. Dispositif d'échange thermique (50) selon l'une quelconque des revendications 1 à 4 et 8 à 13, dans lequel chaque canal (20, 30) comporte une unique ouverture (52, 54) destinée à être connectée à un caloduc.

15. Mur (92, 104) destiné à être monté dans un satellite artificiel, ledit mur (92, 104) comportant :
- un panneau de support (94),
- un premier réseau (26) de caloducs capillaires supporté par ledit panneau de support (94),
- un deuxième réseau (36) de caloducs capillaires supporté par ledit panneau de support (94); **caractérisé en ce qu'**il comporte au moins un dispositif d'échange thermique (2, 40, 50, 56, 60, 68, 69, 70, 76, 77, 78, 88) selon l'une quelconque des revendications 1 à 5 et 7 à 14 supporté par ledit panneau de support (94), chaque canal (20, 30) comportant deux ouvertures (22, 24) sur l'extérieur, le premier canal (20) du dispositif d'échange thermique étant connecté à des caloducs capillaires (25, 27) du premier réseau (26), le deuxième canal (30) du dispositif d'échange thermique étant connecté à des caloducs capillaires (35, 37) du deuxième réseau (36).

16. Mur (92, 104) selon la revendication 15, qui comporte au moins un équipement électronique fixé sur ledit panneau de support, en contact thermique direct ou indirect avec ledit dispositif d'échange thermique.

17. Mur (92) selon l'une quelconque des revendications 15 et 16, qui comprend en outre des angles (96) et dans lequel les caloducs capillaires (25, 27, 100, 102) du premier réseau (26) sont fixés auxdits angles (96) de manière à former une configuration en forme de peigne.

18. Mur (104) selon l'une quelconque des revendications 15 et 16, qui comprend en outre des angles (96), et dans lequel les caloducs capillaires du premier réseau (26) sont fixés auxdits angles (96) de manière à former une configuration en forme de S.

19. Mur (92, 104) selon l'une quelconque des revendications 15 et 16, qui comprend en outre des angles (96), et dans lequel les caloducs capillaires du premier réseau (26) sont fixés auxdits angles (96) de manière à former une configuration en forme de matrice.

20. Assemblage (106) d'un premier mur (108) et d'un deuxième mur (110) destiné à être monté dans un satellite artificiel,
le premier mur (108) comportant un premier panneau (112) et au moins un premier réseau (26) de caloducs capillaires,
le deuxième mur (110) comportant un deuxième panneau (114) et au moins un deuxième réseau (36) de caloducs capillaires, ledit assemblage (106) comportant en outre
un dispositif d'échange thermique (90) selon la revendication 6 supporté par l'un desdits premier panneau (112) et deuxième panneau (114).

## Patentansprüche

1. Wärmetauschvorrichtung (2, 40, 50, 56, 60, 68, 69, 70, 76, 77, 78, 88, 90) zur Sicherstellung eines Wärmetausches zwischen einem Wärmeträgerfluid eines ersten Netzes (26) von Kapillarwärmeröhrchen (25, 27) und einem Wärmeträgerfluid eines zweiten Netzes (36) von Kapillarwärmeröhrchen (35, 37),
**dadurch gekennzeichnet, dass** sie einen massiven Block (4) aufweist, der mit mindestens einem ersten Kanal (20) und einem von dem ersten Kanal (20) unabhängigen zweiten Kanal (30) versehen ist, wobei jeder Kanal (20, 30) eine kapillare Innenstruktur (18) hat, wobei der erste Kanal (20) mindestens eine mit einem Kapillarwärmeröhrchen (25) des ersten Netzes (26) zu verbindende Öffnung (22, 52) hat, der zweite Kanal (30) mindestens eine mit einem Kapillarwärmeröhrchen (35) des zweiten Netzes (36) zu verbindende Öffnung (32, 54) hat, der erste Kanal (20) einen Abschnitt (28, 80) hat, der in der Nähe eines Abschnitts (38, 82) des zweiten Kanals derart angeordnet ist, dass, wenn die Wärmetauschvorrichtung (2, 40, 50, 56, 60, 68, 69, 70, 76, 77, 78, 88, 90) mit dem ersten Netz (26) und mit dem zweiten Netz (36) verbunden ist, das Wärmeträgerfluid des ersten Netzes (26) über die wärmetauschenden Abschnitte (28, 38, 80, 82) im Wärmetausch mit dem Wärmeträgerfluid des zweiten Netzes (36) ist.

2. Wärmetauschvorrichtung (2, 40, 50, 56, 60, 68, 69, 77) nach Anspruch 1, in welcher der erste Kanal (20) und der zweite Kanal (30) jeweils mindestens einen Seitenkanal (28, 38) mit einem geschlossenen Ende (29, 39) aufweisen, wobei der mindestens eine Seitenkanal (28) des ersten Kanals sich parallel und angrenzend an den mindestens einen Seitenkanal (38) des zweiten Kanals erstreckt, wobei die Seitenkanäle (28, 38) die wärmetauschenden Abschnitte sind.

3. Wärmetauschvorrichtung (2, 40, 50, 56, 60, 68, 77) nach Anspruch 2, in welcher der mindestens eine Seitenkanal (28, 38) sich senkrecht zu jedem Kanal (20, 30) erstreckt.

4. Wärmetauschvorrichtung (69) nach Anspruch 2, in welcher der mindestens eine Seitenkanal (28, 38) sich in einer Richtung erstreckt, die einen spitzen Winkel (α) bezüglich eines Teils jedes Kanals (20, 30) bildet.

5. Wärmetauschvorrichtung (2, 40, 56, 60, 68, 69, 70, 76, 77, 78, 88, 90) nach einem der Ansprüche 1 bis 4, in welcher der erste Kanal (20) und der zweite Kanal (30) eine zusätzliche Öffnung (24, 34) aufweisen, die mit einem anderen Kapillarwärmeröhrchen (27, 37) des ersten Netzes (26) bzw. zweiten Netzes (36) zu verbinden ist.

6. Wärmetauschvorrichtung (90) nach Anspruch 5, in welcher die Öffnung (22, 32) sich an einer ersten Fläche (10) des massiven Blocks (4) befindet, die zusätzliche Öffnung (24, 34) sich an einer zweiten Fläche (6, 8) des massiven Blocks befindet, und die erste Fläche (10) senkrecht zur zweiten Fläche (6, 8) ist.

7. Wärmetauschvorrichtung (2, 40, 56, 60, 68, 69, 70, 76, 78, 77, 88) nach Anspruch 5, in welcher die Öffnung (22, 32) sich an einer ersten Fläche (10) des massiven Blocks (4) befindet, die zusätzliche Öffnung (24, 34) sich an einer zweiten Fläche (12) des massiven Blocks befindet, und die erste Fläche (10) im Wesentlichen parallel zur zweiten Fläche (12) ist.

8. Wärmetauschvorrichtung (2, 40, 50, 56, 60, 68, 69, 70, 76, 77, 78, 88, 90) nach einem der Ansprüche 1 bis 7, in welcher der wärmetauschende Abschnitt (28) des ersten Kanals in einem Abstand, der zwischen 1 Millimeter und 3 Millimeter beträgt, von dem wärmetauschenden Abschnitt (38) des zweiten Kanals angeordnet ist.

9. Wärmetauschvorrichtung (2, 40, 56, 60, 68, 69, 70, 76, 78, 90) nach einem der Ansprüche 1 bis 8, in welcher der massive Block (4) eine Auflagefläche (6, 8) aufweist, die an einem Paneel eines künstlichen Satelliten (94) zu befestigen ist, wobei der erste Kanal (20) und der zweite Kanal (30) in einer gleichen Ebene angeordnet sind, wobei die Ebene parallel zu der Auflagefläche (6, 8) ist.

10. Wärmetauschvorrichtung (77, 88) nach einem der Ansprüche 1 bis 7, in welcher der massive Block (4) eine Auflagefläche (6, 8) aufweist, die an einem Paneel (94) eines künstlichen Satelliten zu befestigen ist, wobei der erste Kanal (20) und der zweite Kanal (30) in zwei unterschiedlichen Ebenen angeordnet sind, wobei die Ebenen parallel zu der Auflagefläche (6, 8) sind.

11. Wärmetauschvorrichtung (70, 76) nach einem der Ansprüche 1 und 5 bis 10, in welcher der erste Kanal (20) und der zweite Kanal (30) eine allgemeine Form haben, die ein Mäandermuster oder ein Verzahnungsmuster oder ein Muster gebrochener Linien bildet, wobei mindestens ein Abschnitt (72) des ersten Kanals (20) und mindestens ein Abschnitt (74) des zweiten Kanals (30) die wärmetauschenden Abschnitte sind.

12. Wärmetauschvorrichtung (78) nach einem der Ansprüche 1 und 5 bis 10, in welcher der erste Kanal (20) eine Längsachse (A-A) und einen ersten Hohlraum (80) aufweist, der sich in einer zur Längsachse (A-A) senkrechten Richtung erstreckt, und in welcher der zweite Kanal (30) eine Längsachse (B-B) und einen zweiten Hohlraum (82) aufweist, der sich in einer zur Längsachse (B-B) senkrechten Richtung erstreckt, wobei der erste Hohlraum (80) und der zweite Hohlraum (82) die wärmetauschenden Abschnitte sind.

13. Wärmetauschvorrichtung (88) nach einem der Ansprüche 1 und 5 bis 10, in welcher der massive Block (4) eine Auflagefläche (6, 8) aufweist, die an einem Paneel eines künstlichen Satelliten zu befestigen ist, wobei der erste Kanal (20) und der zweite Kanal (30) einen ersten Hohlraum (80) bzw. einen zweiten Hohlraum (82) aufweisen, die sich jeweils in einer zu der Auflagefläche (6, 8) parallelen Ebene erstrecken, wobei der erste Hohlraum (80) und der zweite Hohlraum (82) die wärmetauschenden Abschnitte sind.

14. Wärmetauschvorrichtung (50) nach einem der Ansprüche 1 bis 4 und 8 bis 13, in welcher jeder Kanal (20, 30) eine einzige mit einem Wärmeröhrchen zu verbindende Öffnung (52, 54) aufweist.

15. In einen künstlichen Satelliten einzubauende Wand (92, 104), aufweisend:
- ein Trägerpaneel (94),
- ein von dem Trägerpaneel (94) getragenes erstes Netz (26) von Kapillarwärmeröhrchen,
- ein von dem Trägerpaneel (94) getragenes zweites Netz (36) von Kapillarwärmeröhrchen;
**dadurch gekennzeichnet, dass** sie mindestens eine von dem Trägerpaneel (94) getragene Wärmetauschvorrichtung (2, 40, 50, 56, 60, 68, 69, 70, 76, 77, 78, 88) nach einem der Ansprüche 1 bis 5 und 7 bis 14 aufweist, wobei jeder Kanal (20, 30) zwei Öffnungen (22, 24) nach außen aufweist, der erste Kanal (20) der Wärmetauschvorrichtung mit Kapillarwärmeröhrchen (25, 27) des ersten Netzes (26) verbunden ist und der zweite Kanal (30) der Wärmetauschvorrichtung mit Kapillarwärmeröhrchen (35, 37) des zweiten Netzes (36) verbunden ist.

16. Wand (92, 104) nach Anspruch 15, die mindestens eine an dem Trägerpaneel angebrachte elektronische Ausstattung in einem direkten oder indirekten thermischen Kontakt mit der Wärmetauschvorrichtung aufweist.

17. Wand (92) nach einem der Ansprüche 15 und 16, die ferner Winkel (96) aufweist, und in welcher die Kapillarwärmeröhrchen (25, 27, 100, 102) des ersten Netzes (26) an den Winkeln (96) angebracht sind, um eine kammförmige Konfiguration zu bilden.

18. Wand (104) nach einem der Ansprüche 15 und 16, die ferner Winkel (96) aufweist, und in welcher die Kapillarwärmeröhrchen des ersten Netzes (26) an den Winkeln (96) angebracht sind, um eine S-förmige Konfiguration zu bilden.

19. Wand (92, 104) nach einem der Ansprüche 15 und 16, die ferner Winkel (96) aufweist, und in welcher die Kapillarwärmeröhrchen des ersten Netzes (26) an den Winkeln (96) angebracht sind, um eine matrizenförmige Konfiguration zu bilden.

20. In einen künstlichen Satelliten einzubauende Anordnung (106) einer ersten Wand (108) und einer zweiten Wand (110), wobei
die erste Wand (108) ein erstes Paneel (112) und mindestens ein erstes Netz (26) von Kapillarwärmeröhrchen aufweist,
die zweite Wand (110) ein zweites Paneel (114) und mindestens ein zweites Netz (36) von Kapillarwärmeröhrchen aufweist,
die Anordnung (106) ferner eine von dem ersten Paneel (112) oder dem zweiten Paneel (114) getragene Wärmetauschvorrichtung (90) nach Anspruch 6 aufweist.

## Claims

1. Heat exchange device (2, 40, 50, 56, 60, 68, 69, 70, 76, 77, 78, 88, 90) for effecting a heat exchange between a heat transfer fluid of a first network (26) of capillary heat pipes (25, 27) and a heat transfer fluid of a second network (36) of capillary heat pipes (35, 37), **characterized in that** it comprises a solid block (4) provided with at least a first channel (20) and a second channel (30) independent of the first channel (20), each channel (20, 30) having a capillary internal structure (18), the first channel (20) having at least one opening (22, 52) intended to be connected to a capillary heat pipe (25) of the first network (26), the second channel (30) having at least one opening (32, 54) intended to be connected to a capillary heat pipe (35) of the second network (36), the first channel (20) having a portion (28, 80) which lies near a portion (38, 82) of the second channel such that, when the heat exchange device (2, 40, 50, 56, 60, 68, 69, 70, 76, 77, 78, 88, 90) is connected to the first network (26) and to the second network (36), the heat transfer fluid of the first network (26) is able to exchange heat with the heat transfer fluid of the second network (36) via said heat exchanging portions (28, 38, 80, 82).

2. Heat exchange device (2, 40, 50, 56, 60, 68, 69, 77) according to claim 1, wherein the first channel (20) and the second channel (30) each comprise at least one side channel (28, 38) having a closed terminal end (29, 39), said at least one side channel (28) of the first channel extending parallel and adjacent to said at least one side channel (38) of the second channel, said side channels (28, 38) being said heat exchanging portions.

3. Heat exchange device (2, 40, 50, 56, 60, 68, 77) according to claim 2, wherein said at least one side channel (28, 38) extends perpendicularly to each channel (20, 30).

4. Heat exchange device (69) according to claim 2, wherein said at least one side channel (28, 38) extends in a direction forming an acute angle (α) with respect to a portion of each channel (20, 30).

5. Heat exchange device (2, 40, 56, 60, 68, 69, 70, 76, 77, 78, 88, 90) according to any one of claims 1 to 4, wherein the first channel (20) and the second channel (30) comprise an additional opening (24, 34) intended to be connected to another capillary heat pipe (27, 37) of the first network (26) and respectively of the second network (36).

6. Heat exchange device (90) according to claim 5, wherein said opening (22, 32) is located on a first face (10) of said solid block (4), and said additional opening (24, 34) is located on a second face (6, 8) of said solid block, said first face (10) being perpendicular to said second face (6, 8).

7. Heat exchange device (2, 40, 56, 60, 68, 69, 70, 76, 78, 77, 88) according to claim 5, wherein said opening (22, 32) is located on a first face (10) of said solid block (4), and said additional opening (24, 34) is located on a second face (12) of said solid block, said first face (10) being substantially parallel to said second face (12).

8. Heat exchange device (2, 40, 50, 56, 60, 68, 69, 70, 76, 77, 78, 88, 90) according to any one of claims 1 to 7, wherein said heat exchanging portion (28) of the first channel is located at a distance of between 1 millimeter and 3 millimeters from said heat exchanging portion (38) of the second channel.

9. Heat exchange device (2, 40, 56, 60, 68, 69, 70, 76, 78, 90) according to any one of claims 1 to 8, wherein said solid block (4) comprises a bearing face (6, 8) intended to be fixed to a panel of an artificial satellite (94), and the first channel (20) and second channel (30) are arranged in one and the same plane, said plane being parallel to said bearing face (6, 8).

10. Heat exchange device (77, 88) according to any one of claims 1 to 7, wherein said solid block (4) comprises a bearing face (6, 8) intended to be fixed to a panel (94) of an artificial satellite, and the first channel (20) and second channel (30) are arranged in two separate planes, said planes being parallel to said bearing face (6, 8).

11. Heat exchange device (70, 76) according to any one of claims 1 and 5 to 10, wherein the first channel (20) and second channel (30) have a general shape forming one of the patterns among a Greek pattern, a tooth pattern, and a pattern of jagged lines, at least a portion (72) of said first channel (20) and at least a portion (74) of said second channel (30) being said heat exchanging portions.

12. Heat exchange device (78) according to any one of claims 1 and 5 to 10, wherein the first channel (20) comprises a longitudinal axis (A-A) and a first cavity (80) extending in a direction perpendicular to the longitudinal axis (A-A), and wherein the second channel (30) comprises a longitudinal axis (B-B) and a second cavity (82) extending in a direction perpendicular to the longitudinal axis (B-B), said first cavity (80) and second cavity (82) being said heat exchanging portions.

13. Heat exchange device (88) according to any one of claims 1 and 5 to 10, wherein said solid block (4) comprises a bearing face (6, 8) intended to be fixed to a panel of an artificial satellite, the first channel (20) and second channel (30) respectively comprising a first cavity (80) and a second cavity (82) which each extend in a plane parallel to said bearing face (6, 8), said first cavity (80) and second cavity (82) being said heat exchanging portions.

14. Heat exchange device (50) according to any one of claims 1 to 4 and 8 to 13, wherein each channel (20, 30) has a single opening (52, 54) intended to be connected to a heat pipe.

15. Wall (92, 104) intended for mounting in an artificial satellite, said wall (92, 104) comprising:
- a support panel (94),
- a first network (26) of capillary heat pipes supported by said support panel (94),
- a second network (36) of capillary heat pipes supported by said support panel
**characterized in that** it comprises at least one heat exchange device (2, 40, 50, 56, 60, 68, 69, 70, 76, 77, 78, 88) according to any one of claims 1 to 5 and 7 to 14 supported by said support panel (94), each channel (20, 30) having two openings (22, 24) to the exterior, the first channel (20) of the heat exchange device being connected to capillary heat pipes (25, 27) of the first network (26), the second channel (30) of the heat exchange device being connected to capillary heat pipes (35, 37) of the second network (36).

16. Wall (92, 104) according to claim 15, comprising at least one electronic device fixed to said support panel, in direct or indirect thermal contact with said heat exchange device.

17. Wall (92) according to any one of claims 15 and 16, further comprising angles (96), and wherein the capillary heat pipes (25, 27, 100, 102) of the first network (26) are fixed to said angles (96) so as to form a comb-shaped configuration.

18. Wall (104) according to any one of claims 15 and 16, further comprising angles (96), and wherein the capillary heat pipes of the first network (26) are fixed to said angles (96) so as to form an S-shaped configuration.

19. Wall (92, 104) according to any one of claims 15 and 16, further comprising angles (96), and wherein the capillary heat pipes of the first network (26) are fixed to said angles (96) so as to form a matrix-shaped configuration.

20. Assembly (106) of a first wall (108) and second wall (110), intended for mounting in an artificial satellite,
the first wall (108) comprising a first panel (112) and at least a first network (26) of capillary heat pipes,
the second wall (110) comprising a second panel (114) and at least a second network (36) of capillary heat pipes,
said assembly (106) further comprising a heat exchange device (90) according to claim 6 supported by one among said first panel (112) and second panel (114).
